# EUROPÄISCHE PATENTANMELDUNG

(11) **EP 4 339 019 A1**
(43) Veröffentlichungstag der Anmeldung: **20.03.2024**
(21) Anmeldenummer: 22196087.5
(22) Anmeldetag: 16.09.2022
(51) Int. Cl.: B60P 3/00, G07C 9/00, G06Q 10/083

(54) **FAHRZEUG MIT EINER AUF DEM FAHRZEUG ANGEORDNETEN PAKETSTATION**

(71) Anmelder: CityLog GmbH, 28195 Bremen (DE)
(72) Erfinder: Ben Aissa, Selim, 28195 Bremen (DE); Owald, Daniel, 28816 Stuhr (DE); Hofmann, Patrick, 28195 Bremen (DE)
(74) Vertreter: Gille Hrabal Partnerschaftsgesellschaft mbB Patentanwälte

(57) **Zusammenfassung**

Das erfindungsgemäße Fahrzeug (1) mit einer auf dem Fahrzeug angeordneten Paketstation (2), ist dadurch gekennzeichnet, dass
die Paketstation eine Vielzahl von getrennten Fächern (3) aufweist;
die Fächer (3) nebeneinander und übereinander angeordnet sind;
jedes Fach über eine durch ein Schloss (41) ver- und entriegelbare Türe (4) verfügt, welche den Zugriff auf das Fach ermöglicht, wobei die Türe nur über einen dieser Tür zugeordneten Schlüssel (42) entriegelbar ist;
jeder Türe (3) ein anderer Schlüssel (42) zugeordnet ist, mittels welchem nur diese Türe entriegelbar ist und nicht die anderen Türen entriegelbar sind; und ein Masterschlüssel (44) allen Türen bzw. einer Gruppe von Türen zugeordnet ist, mittels welchem alle Türen bzw. die Gruppe von Türen entriegelbar ist. Dies ermöglich die Nutzung des Fahrzeugs als Auslieferfahrzeug und mobile Paketstation.

## Beschreibung

Die Erfindung betrifft ein Fahrzeug mit einer auf dem Fahrzeug angeordneten Paketstation.

Eine Paketstation, auch bekannt als Packstation, ist ein Paketautomat, der einen automatisierten Empfang und/oder die Abgabe von Paketen und Päckchen ermöglicht. Eine meist schrank- oder regalartig aufgebaute Paketstation weist, wie zuvor das Postfach, eine Vielzahl von getrennten Fächern zum Ablegen der Pakete auf, die in der Regel nebeneinander und übereinander angeordnet sind. Dabei verfügte jedes Fach über eine durch ein Schloss ver- und entriegelbare Türe, welche den Zugriff auf das Fach ermöglicht. Damit der berechtigte Nutzer nur Zugriff auf sein Fach und Paket erhält, ist diese Türe nur über einen dieser Tür zugeordneten Schlüssel entriegelbar. Es ist also jeder Türe ein anderer Schlüssel zugeordnet, mittels welchem nur diese Türe entriegelbar ist und nicht die anderen Türen entriegelbar sind. Als Schloss-Schlüssel Paarung werden dabei alle technischen zeigemäßen Lösungen eingesetzt, insbesondere RFID, Chipkarte, QR Code mit entsprechendem Lesegerät oder ein PIN Code. Sendungen können direkt an eine Paketstation gesendet werden, insbesondere für reisende Handwerker, oder es erfolgt eine ersatzweise Zustellung an eine Packstation, wenn bei der Paketzustellung an eine Hausadresse der Empfänger nicht angetroffen wurde.

Mit der Zunahme von Paketsendungen steigt die Anzahl der bei dem Zustellversuch nicht angetroffenen Empfänger. Ferner gibt es zunehmend tagsüber abwesende Empfänger, die sich direkt für eine abendliche Abholung bei einer der Paketstationen entscheiden, das aus Sicht der Logistikunternehmen zu bevorzugen ist. Da Paketstationen ortsfest sind, müssen aus Empfängersicht attraktive Standorte bereitgestellt werden, die daher knapp werden. Ferner ist das Füllen der dezentral angeordneten Paketstationen arbeitsaufwendig wegen der Anfahrt und dem Auffüllen vor-Ort.

Das Projekt CitySnap der Rinspeed AG, CH-Zumikon betrifft Fahrzeug, die mobilen Packstationen vollautomatisiert be- und entlädt. Diese mobilen Packstationen werden zeitweilig abgestellt, beispielsweise in der Nachbarschaft der Kunden. Es müssen Vereinbarungen über die Abstellflächen getroffen werden.

Die Bofrost Dienstleistungs GmbH und Co. KG, DE-Straelen, liefert Tiefkühlware mit Kühltransportern direkt zu Haushalten. Die Ware liegt in kleineren separaten Kühlfächern, die jeweils über eine eigene verschließbare Türe erreichbar sind. Alle Türen haben denselben Schlüssel.

Die Picnic GmbH, DE-Düsseldorf verwendet eine Flotte von Elektrokleinlieferwagen um Lebensmitteleinkäufe direkt an Haushalte zu liefern. In einen Rahmen des Fahrzeuges wird dabei ein Regal mit Einschüben, die bereits im Depot mit Waren für einen Haushalt kommissioniert sind, eingeschoben. Die Einschübe sind nicht einzeln verschließbar.

Lieferwagen zur Auslieferung von Sendungen an Empfänger sind häufig normale oder leicht modifizierte Lieferwagen, z.B. Mercedes Sprinter. Der Zusteller verlässt die Fahrerkabine und geht außerhalb des Fahrzeugs zu einer seitlichen oder hinteren Türe, durch welche er den Lagerraum mit den Sendungen betritt. Dabei muss er mehrfach Höhenunterschiede überwinden. Einige Spezialfahrzeuge erlauben dem Fahrer einen unmittelbaren Zugang zum Lagerraum ohne Aussteigen.

Zustellfahrzeuge sind nur werktags tagsüber unterwegs und müssen nach den üblichen Zustellzeiten von 7 bis 18 Uhr geparkt werden. Dies erfordert große Flächen für die zahlreichen nachts geparkten Fahrzeuge, was Kosten verursacht. Ferner werden diese Investitionsgüter nur zu einem kleinen Teil des Tages genutzt.

Es ist daher Aufgabe der Erfindung ein verbessertes Fahrzeug mit einer auf dem Fahrzeug angeordneten Paketstation anzugeben, sowie ein Verfahren zur Nutzung desselben.

Diese Aufgabe wird gelöst durch ein verbessertes Fahrzeug mit einer auf dem Fahrzeug angeordneten Paketstation mit den Merkmalen des Hauptanspruchs, sowie mit einem Verfahren zur Nutzung desselben mit den Merkmalen des nebengeordneten Anspruchs. Vorteilhafte Ausgestaltungen sind Gegenstand der abhängigen Ansprüche.

Das erfindungsgemäße Fahrzeug weist eine auf dem Fahrzeug angeordneten Paketstation auf. Der Begriff Paketstation ist funktionell auszulegen und umfasst somit jede Einrichtung mittels der die Funktionen eine Paketstation ausführbar sind. Demzufolge weist die Paketstation eine Vielzahl von getrennten Fächern auf, welche regalartig nebeneinander und übereinander angeordnet sind. Dabei verfügt jedes Fach über eine durch ein eigenständiges Schloss ver- und entriegelbare Türe, welche den Zugriff auf das Fach ermöglicht. Dabei ist jede Türe nur über einen dieser Tür zugeordneten Schlüssel entriegelbar, so dass jeder Türe ein anderer Schlüssel zugeordnet ist, mittels welchem nur diese Türe entriegelbar ist und nicht die anderen Türen entriegelbar sind. Dieses ermöglicht den Einsatz des Fahrzeugs als mobile Paketstation an einem beliebigen Ort. Die Paketstation kann beispielsweise in der Innenstadt oder auf einem Parkplatz eines Unternehmens oder Supermarkts über Nacht abgestellt werden und dort als Paketstation dienen. Die Empfänger von Sendungen holen diese dort ab. Vorteilhafterweise sind auch in begehrten Innenstadt- bzw. Einkaufslagen abends und nachts Parkplätze vorhanden, die somit genutzt werden können, auch gegen Entgelt. Paketstationen können somit zeitnah und bedarfsgerecht dort zur Verfügung gestellt werden, wo tatsächlich Bedarf ist. Übliche Paketstationen sind unflexibel und deren Errichtung benötigt Genehmigungen und zeitlichen Vorlauf. Jede Aufgabe eines Standorts und Errichtung eines neuen Standorts ist mit Kosten und Zeitaufwand verbunden.

Wenn ein Masterschlüssel allen Türen bzw. zumindest einer Gruppe von Türen zugeordnet ist, mittels welchem alle Türen bzw. die Gruppe von Türen entriegelbar ist, können alle Fächer bequem beladen werden, da alle Türen entriegelt sind. Der Zusteller muss daher nicht einzeln eine Türe mit dem passenden Schlüssel entriegeln, sondern kann beliebige Türen ohne aktive Auswahl des passenden Schlüssels öffnen. Daher kann das erfindungsgemäße Fahrzeug gleichzeitig als normales Paketzustellfahrzeug benutzt werden: Im Depot werden die Fächer mit den zuzustellenden Sendungen beladen und anschließend ausgefahren. Der Fahrer öffnet mit dem Masterschlüssel alle Türen oder die am Zustellort benötigte Türe, entnimmt die Sendung und übergibt diese.

Erfindungsgemäß wird das Fahrzeug also abwechselnd als Zustellfahrzeug und in der restlichen Zeit als an einem bestimmten Ort abgestellte Paketstation betrieben. Die Hardware ist daher 24 Stunden im Einsatz und amortisiert sich schneller als ein normales Zustellfahrzeug und eine separate Paketstation

Vorzugsweise ist das Fahrzeug ein Lastenfahrrad, Elektrolastenfahrrad, Lieferwagen oder Elektrolieferwagen. Damit wird eine mobile Paketstation bereitgestellt, die Einsatzort abhängig bedarfsgerecht auf die für jeweiligen Auslieferbetrieb passende Fahrzeugart zugeschnitten ist. Dies kann auch ein Anhänger, insbesondere lenkbarer Anhänger, sein.

Ferner vorzugsweise sind die Türen in mindestens einer Seitenwand und vorzugsweise beiden lateralen Seitenwänden des Fahrzeugs vorgesehen und lateral vom Fahrzeug weg aufschwenkbar. Der Fahrer muss daher im Auslieferbetrieb nicht immer den Laderaum seines Fahrzeuges ersteigen, um an die Sendungen zu gelangen. Das Entnehmen der Sendungen von der Seite ist für den Fahrer angenehmer. Ferner können im Depot die Fächer von den beiden Seiten des Fahrzeugs beladen werden, was ebenfalls eine Arbeitserleichterung ist.

Zweckmäßigerweise sind die Fächer ausschließlich durch deren Türen zugänglich. Dies erhöht die Sicherheit der in den Fächern befindlichen Sendungen gegen unbefugtes Entnahme. Insbesondere gibt es also keinen Zugriff von der Rückseite.

Eine besonders effektive Nutzung ergibt sich, wenn die Paketstation als austauschbare Einheit ausgebildet ist, die modulartig mit dem Fahrzeug verbunden und von diesem entfernt werden kann. Somit kann z.B. während des Auslieferbetriebes des Fahrzeuges eine weitere austauschbare Einheit ohne Zeitdruck im Depot mit den Sendungen beladen werden, gleich ob für die Einheit für einen weiteren Auslieferbetrieb oder eine Nutzung als Paketstation vorgesehen ist. Das Fahrzeug tauscht lediglich in Depot die Einheiten und ist sofort wieder einsetzbar. Die Einheit kann insbesondere als Aufbau zum Aufsetzen auf das Fahrzeug ausgebildet sein.

In einer Ausführungsform umfasst das Fahrzeug einen Verriegelungsmechanismus zum Verriegeln der als austauschbaren Einheit ausgestalteten Paketstation mit dem Fahrzeug vorgesehen. Der Verriegelungsmechanismus weist insbesondere eine Gelöst-Stellung und eine Verriegelt-Stellung auf. In der Gelöst-Stellung kann die Paketstation vom Fahrzeug entfernt werden. In der Verriegelt-Stellung kann die Paketstation nicht von dem Fahrzeug entfernt werden. Der Verriegelungsmechanismus ermöglicht eine einfache Implementierung eines Diebstahlschutzes der Paketstation-Einheit. In einer Ausgestaltung ist das Fahrzeug so eingerichtet, dass der Verriegelungsmechanismus nur dann von der Verriegelt-Stellung in die Gelöst-Stellung gebracht werden kann, wenn ein vordefiniertes Fach der Paketstation geöffnet ist. Auf diese Weise kann besonders einfach und wirkungsvoll ein nicht autorisiertes Entfernen der Paketstation vom Fahrzeug erreicht werden. In einer Ausgestaltung ist der Schlüssel ein digitaler Schlüssel und das vordefinierte Fach wird bei jeder Verriegelung verändert und neu definiert. Dies erhöht den Diebstahlschutz. In einer Ausgestaltung ist der Verriegelungsmechanismus mechanisch oder zumindest teilweise mechanisch ausgeführt und/oder umfasst einen beweglichen Riegel (insbesondere an der Oberseite des Fahrzeugs), der in eine entsprechende Riegelaufnahme (insbesondere an der Unterseite der Paketstation) bewegt werden und daraus gelöst werden kann. Vorzugsweise wird der Riegel mithilfe eines Bowdenzugs bewegt, der eine translatorische Bewegung des Bowdenzugs in eine rotatorische Bewegung des entsprechend gelagerten Riegels umwandelt wird. In einer Ausgestaltung wird der Bowdenzug durch einen Elektromotor bewegt, der über eine Steuerung der Paketstation angesteuert wird. In einer Ausführungsform umfasst die Paketstation eine zentrale Benutzerschnittstelle, an der ein digitaler Schlüssel eingelesen werden kann, um ein Fach zu öffnen und/oder ein Benutzer einen Code eingeben kann, um die Verriegelungseinrichtung motorisiert in die Gelöst-Stellung zu bringen. In einer Ausgestaltung ist in einem vordefinierten Fach eine Benutzerschnittstelle zum Eingeben des Codes, um die Verriegelungseinrichtung motorisiert in die Gelöst-Stellung zu bringen. In einer Alternativen Ausgestaltung ist eine mechanische Benutzerschnittstelle, insbesondere Knopf oder Hebel, in einem der Fächer angeordnet, so dass zum Überführen des Verriegelungsmechanismus in die Gelöst-Stellung dieses Fach zu öffnen ist und die mechanische Benutzerschnittstelle mechanisch zu betätigten ist. Vorzugsweise ist eine solche mechanische Benutzerschnittstelle durch ein zusätzliches Schloss gesichert, damit kein unplanmäßiges Betätigen des Verriegelungsmechanismus durch einen Nutzer erfolgt, der lediglich zufällig aus diesem Fach ein Paket abholt. In einer Ausgestaltung sind an der Oberseite der Ladefläche des Fahrzeugs mindestens zwei Schienen angeordnet und/oder die als austauschbare Einheit ausgestalteten Paketstation weist zwei längliche Nuten an dessen Unterseite, so dass ein Aufsetzen der Paketstation auf das Fahrzeug derart erfolgt, dass die Schienen in die Nuten der Paketstation greifen. Eine erhöhte Sicherheit im Fahrbetrieb wird so ermöglicht.

In einer Ausgestaltung, die sich insbesondere für kleinere und schmalere Fahrzeuge, wie z.B. Lastenrad, Elektrolastenrad oder Kleintransporter eignet, ist die Paketstation als Einschub zum seitlichen Einschieben in einen Rahmen des Fahrzeugs ausgebildet

Die Begriffe Schloss und Schlüssel bzw. Masterschlüssel sind funktionell auszulegen: Jede Kombination aus einer technischen entriegelbaren Sperre und einem individuellen Gegenstück zum Entsperren ist geeignet, insbesondere ein analoges oder digitales Zahlenschloss mit Zahlencode/PIN; ein digitales Lesegerät mit digitalem Schlüssel, wie z.B. RFID Leser mit RFID Chip oder Barcode-Lesegerät und Barcode bzw. QR Code; oder ein Computer, welcher über Funknetzwerk oder Internetverbindung über eine App eine Türe öffnet. Als Schloss-Schlüssel System kann auch ein NFC System eingesetzt werden. NFC steht für "Near Field Communication" zur kontaktlosen Datenübertragung.

Das Schloss muss auch nicht zwingend an der Türe vom Nutzer mittels des Schlüssel entriegelt werden, sondern es kann ein zentrales Schloss, z.B. ein Barcodeleser an einer zentralen Stelle für alle Türen vorgesehen sein, welches nach Betätigung des Schlüssels, z.B. einem QR Code, die zugeordnete Türe entriegelt oder öffnet.

Vorzugsweise ist als Masterschlüssel eine elektrische Schaltung, z.B. mittels eines Knopfes oder Fernbedienung vorgesehen. Der Fahrer im Zustellbetrieb, aber auch die Lader im Depot, können somit sehr bequem, schnell und störungssicher alle Türen entriegeln bzw. verriegeln.

Das erfindungsgemäße Verfahren zur Benutzung eines Fahrzeugs mit einer Paketstation, vorzugsweise des oben beschriebenen Fahrzeuges, umfasst die folgenden Schritte:
A) Beladen des Fahrzeugs mit ausliefernden Sendungen;
B) Verwendung des Fahrzeugs als Auslieferfahrzeug und Ausliefern der Sendungen; danach
C) Beladen des Fahrzeuges mit von den Empfängern selber abzuholenden Sendungen;
D) Fahren des Fahrzeugs an einen Ort und dortiges Abstellen;
E) Verwendung des Fahrzeugs als ortsfeste Paketstation durch die Empfänger der selbst abzuholenden Sendungen an dem Ort;
F) Wiederholung des Verfahrens.

Dabei kann der Ort vorbestimmt sein, z.B. immer derselbe Parkplatz. Bei problematischer Parkraumsituation kann auch ein beliebiger freier Parkplatz im ungefähren Zielgebiet angefahren werden, dessen Position automatisch, insbesondere beim erkannten Parken, an die Empfänger, ggfls. mit dem Schlüssel, an die Empfänger der in der abgestellten Paketstation hinterlegten Sendungen übermittelt wird. Die Nutzung als Paketstation umfasst alle bekannten Nutzungen, also neben der Abholung von Sendungen auch die Aufgabe von Sendungen oder die Retouren-Rückgabe.

Vorzugsweise umfasst der Schritt A):
- Bereitstellen des Fahrzeugs mit mit Sendungen gefüllten Fächern und verriegelten Türen, wobei die Sendungen an Empfänger an bestimmten Adressen auszuliefern sind.

Der Schritt A) umfasst somit die normalen Schritte, wie sie bei einem Auslieferungsfahrzeug beim Beladen zur Vorbereitung des Auslieferungsbetriebs durchgeführt werden.

Vorzugsweise umfasst der Schritt B):
- Fahren des Fahrzeugs zu der Vielzahl von bestimmen Adressen und dabei wiederholt:
   o Entriegeln der Türe des Fachs, in welcher sich die an der jeweiligen bestimmten Adresse auszuliefernden Sendung befindet mittels des Masterschlüssels;
   o Öffnen der Türe;
   o Entnehmen der Sendung; Schließen der Türe;
   o Übergeben der Sendungen an den Empfänger;
- Fahren des Fahrzeugs zu einem Depot wenn die Auslieferungen beendet sind;
- Entriegeln aller Türen mittels des Masterschlüssels;
- optional: Entnehmen der nicht-ausgelieferten Sendungen;

Der Schritt B) umfasst somit die normalen Schritte, wie sie bei einem Auslieferungsfahrzeug im Auslieferungsbetrieb durchgeführt werden.

Vorzugsweise umfasst der Schritt C):
- Befüllen der Fächer der Paketstation mit Sendungen, die für die Benutzer der Paketstation bestimmt sind;
- optional: Übermittlung des Schlüssels, welcher der Tür des Fachs mit der Sendung für den jeweiligen Empfänger zugeordnet ist, an den jeweiligen Empfänger;
- optional: Übermittlung des Ortes, an welchen das Fahrzeug durch Durchführung des Schrittes D) fahren soll an die jeweiligen Empfänger, sofern der Ort bereits zum Zeitpunkt der Durchführung des Schrittes C) bestimmt ist;
- Schließen und Verriegeln aller Türen;

Der Schritt C) umfasst somit im Wesentlichen die Schritte, wie sie bei beim Beschicken einer Paketstation durchgeführt werden, mit der wichtigen Ausnahme, dass die Paketstation Bestandteil eines Fahrzeugs und vorzugsweise bequem im Depot beschickbar ist. Ferner sind Ortsdaten an die Empfänger zu versenden, die nicht fix sondern veränderbar sind.

Vorzugsweise umfasst der Schritt D):
- Fahren des Fahrzeugs an einen vorbestimmten und den Benutzern bekannten Ort und Abstellen des Fahrzeugs dort;
- optional: Übermittlung des Ortes, an welchem das Fahrzeug nach der Fahrt abgestellt worden ist an die jeweiligen Empfänger, wobei vorzugsweise der Ort durch ein im Fahrzeug installiertes GPS System festgestellt wurde;
- optional: Übermittlung des Schlüssels, welcher der Tür des Fachs mit der Sendung für den jeweiligen Empfänger zugeordnet ist, an den jeweiligen Empfänger;
- optional: Anschließen des Fahrzeugs an eine Infrastruktur, insbesondere Stromnetz, vorzugsweise zur Stromversorgung der Paketstation oder Laden der Akkus der Paketstation oder der Akkus des als Elektrofahrzeug ausgelegten Fahrzeugs;

Der Schritt D) umfasst somit die im Wesentlichen die Schritte, die mit dem Fahren des Fahrzeugs einschließlich der Paketstation an einen Ort, verbunden sind. Falls die Ortsdaten erst nach dem tatsächlichen Auffinden eines freien Parkplatzes im Zielgebiet bekannt sind, werden vorzugsweise diese automatisiert an die Empfänger versandt. Unabhängig davon können vorzugsweise die Schlüssel erst nach dem tatsächlichen Parken des Fahrzeugs versandt werden, damit im Fall einer Verspätung, beispielsweise durch Stau, die Empfänger nicht zu früh am zuvor bekannt gemachten Ort erscheinen.

Vorzugsweise umfasst der Schritt E):
- Wiederholt für alle abholenden Empfänger:
   o Entriegeln der Türe des Fachs, in welcher sich die von dem jeweiligen Empfänger abzuholende Sendung befindet mittels des Schlüssels, welcher der Tür des Fachs mit der Sendung für den jeweiligen Empfänger zugeordnet ist und welcher an dem Empfänger im Schritt C) oder D) übermittelt wurde:
      o Öffnen der Türe;
      o Entnehmen der Sendung;
      o Optional: Einlegen einer Retoure durch den Empfänger in das geöffnete Fach;
      o Schließen und Verriegeln der Türe;
- Fahren des Fahrzeugs zu dem Depot wenn die Nutzung als ortsfeste Paketstation beendet ist;
- Entriegeln aller Türen mittels des Masterschlüssels;
- optional: Entnehmen der nicht-abgeholten Sendungen.

Der Schritt E) umfasst somit die im Wesentlichen die Schritte, die mit der Nutzung einer Paketstation umfasst sind, einschließlich insbesondere neben der Abholung von Sendungen auch die Aufgabe von Sendungen oder die Retouren-Rückgabe. Das Schließen und Verriegeln nach dem Öffnen ersetzt dabei den Nachweis der Übergabe und wird protokolliert.

Vorzugsweise umfasst der Schritt E), dass die Paketstation auch zur Rückgabe von Retouren oder Aufgabe von Sendungen eingesetzt wird. Die Registrierungsvorgänge laufen dabei genauso ab, wie bei stationären Paketstationen, mit Ausnahme der oben geschilderten Informationsübermittlung in Bezug auf den tatsächlichen Ort des Fahrzeugs mit der Paketstation.

Ferner vorzugsweise kann die Paketstation auch als Warenverkaufsautomat ausgebildet sein, insbesondere durch räumliche oder zeitliche Aufteilung. Eine räumliche Aufteilung liegt dann vor, wenn ein oder mehrere Fächer als Warenverkaufsautomat genutzt werden und zuvor entsprechend beschickt worden sind: Die Empfänger von Sendungen können diese dann wie gewohnt abholen. Gleichzeitig können die Benutzer des Warenverkaufsautomats dagegen die dafür vorgesehenen Fächer nutzen und haben den dafür notwendigen Schlüssel im Rahmen eines Verkaufssystems - z.B. vorab über das Internet, eine App, oder auch mittels einer Bedienerschnittstelle an der Paketstation, erworben. Die Beschickung kann insbesondere während des Schrittes C) erfolgen.

Eine zeitliche Aufteilung liegt dann vor, wenn alle Fächer zu einer bestimmten Zeit als Warenverkaufsautomat genutzt werden und zuvor entsprechend beschickt worden sind. In einem ersten Zeitraum können die Empfänger von Sendungen diese dann wie gewohnt bei der Paketstation abholen. Ab einer gewissen Uhrzeit ist diese Abholung zunehmend unwahrscheinlich und die Paketstation wird entladen und mit der zu verkaufenden Ware beschickt und wieder an einem Ort abgestellt. Nun können die Benutzer des Warenverkaufsautomats die dafür vorgesehenen Fächer nutzen und haben den dafür notwendigen Schlüssel im Rahmen eines Verkaufssystems - z.B. vorab über das Internet, eine App, oder auch mittels einer Bedienerschnittstelle an der Paketstation, z.B. als Teil des zentralen Schlosses, erworben. Beispielsweise kann der Zeitplan des erfindungsgemäßen Fahrzeugs so aussehen:
8 - 9h: Beladen mit Sendungen für den Auslieferbetrieb;
9 - 16 h: Auslieferbetrieb;
16 - 17h: Beladen mit Sendungen für den Betrieb als Paketstation;
17 - 23h: Betrieb als Paketstation;
23 - 24h: Entladen der Paketstation und Beschicken mit Waren;
01 - 06h: Betrieb als Warenverkaufsautomat.

Am Wochenende ist auch die ganztägige Nutzung als Verkaufsautomat möglich. Diese Nutzung bietet sich für Waren an, die häufig dringend und außerhalb aller Geschäftszeiten benötigt werden, wie z.B. Reparaturkits insbesondere für Sanitär Handwerker, Spezialwerkzeug, Hygiene Artikel. Die Nutzung als Verkaufsautomat schließt auch die Nutzung als Verleihstation ein, so dass z.B. dringend benötigtes Spezialwerkzeug leihweise entnommen und danach wieder an der Paketstation abgegeben werden kann.

Die beispielartige beschriebene Nutzung der Paketstation auch als Warenverkaufsautomat ermöglicht daher Synergieeffekte, da eine einzige Hardware parallel oder im zeitweisen Wechsel vielseitiger und somit nahezu 24 Stunden an allen Wochentagen sinnvoll eingesetzt werden kann und nicht im Depot ruht. Auch für die Arbeit im Depot macht es keinen Unterschied, ob Waren oder Sendungen in die Fächer gelegt werden.

Ein weiterer Aspekt der Erfindung betrifft ein System mit einem Fahrzeug und einer Paketstation mit den oben beschriebenen Merkmalen zur Lösung der Aufgabe. Das System ist so eingerichtet, dass es die Durchführung mindestens eines der oben beschriebenen Verfahren erlaubt.

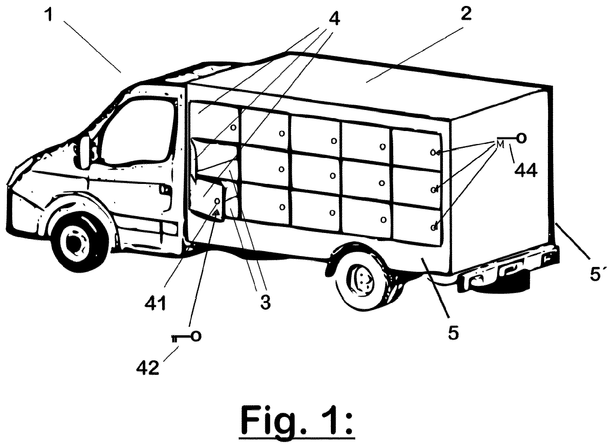

Im Folgenden wird die Erfindung beispielartig und nicht beschränkend erläutert anhand von Zeichnungen. Dabei zeigt Fig. 1: das erfindungsgemäße Fahrzeug mit Paketstation in der perspektivischen Ansicht.

Fig. 1 zeigt das erfindungsgemäße Fahrzeug 1 mit der darauf befestigen Paketstation 2. Die Paketstation umfasst eine Vielzahl von getrennten Fächern 3, die hier wie bei einem Regal nebeneinander und übereinander angeordnet sind. Jedes Fach 3 ist durch eine Türe 4 geschlossen. Jede Türe ist durch ein Schloss 41 ver- und entriegelbar. Der Zugriff auf das Fach ist somit nur über einen dieser Tür 4 zugeordneten Schlüssel 42 möglich, hier stellvertretend angedeutet als konventioneller mechanischer Schlüssel. Jeder Türe 4 bzw. Schloss 41 ist ein anderer Schlüssel 42 zugeordnet. Gleichzeitig kann durch einen Masterschlüssel 44, der allen Türen 3 bzw. Schlössern 41 zugeordnet ist, alle Türen entriegelt werden.

Die Türen 4 sind in den beiden lateralen Seitenwänden 5,5' vorgesehen und somit sind die Fächer 3 lateral paarweise angeordnet, das jeweilige linke Fach 3 ist also von der linken Seitenwand 5 und das jeweilige rechte Fach 3 ist von der rechten Seitenwand 5'erreichbar.

## Patentansprüche

1. Fahrzeug (1) mit einer auf dem Fahrzeug angeordneten Paketstation (2), wobei
die Paketstation eine Vielzahl von getrennten Fächern (3) aufweist;
die Fächer (3) nebeneinander und übereinander angeordnet sind;
jedes Fach über eine durch ein Schloss (41) ver- und entriegelbare Türe (4) verfügt, welche den Zugriff auf das Fach ermöglicht, wobei die Türe nur über einen dieser Tür zugeordneten Schlüssel (42) entriegelbar ist;
jeder Türe (3) ein anderer Schlüssel (42) zugeordnet ist, mittels welchem nur diese Türe entriegelbar ist und nicht die anderen Türen entriegelbar sind; und
ein Masterschlüssel (44) allen Türen bzw. einer Gruppe von Türen zugeordnet ist, mittels welchem alle Türen bzw. die Gruppe von Türen entriegelbar ist.

2. Fahrzeug nach einem der vorherigen Ansprüche, **dadurch gekennzeichnet, dass** das Fahrzeug (1) ein Lastenfahrrad, Elektrolastenfahrrad, Lieferwagen oder Elektrolieferwagen ist oder ein Anhänger, insbesondere lenkbarer Anhänger.

3. Fahrzeug nach einem der vorherigen Ansprüche, **dadurch gekennzeichnet, dass** die Türen (3) in mindestens einer Seitenwand (5) und vorzugsweise beiden lateralen Seitenwänden (5, 5') des Fahrzeugs vorgesehen sind und lateral vom Fahrzeug weg aufschwenkbar sind, so dass die Fächer (3) von den beiden Seiten des Fahrzeugs beladen und entladen werden können.

4. Fahrzeug nach einem der vorherigen Ansprüche, **dadurch gekennzeichnet, dass** die Fächer (3) ausschließlich durch deren Türen (4) zugänglich sind.

5. Fahrzeug nach einem der vorherigen Ansprüche, **dadurch gekennzeichnet, dass** die Paketstation (2) als austauschbare Einheit ausgebildet ist, die modulartig mit dem Fahrzeug verbunden und von diesem entfernt werden kann.

6. Fahrzeug nach einem der vorherigen Ansprüche, **dadurch gekennzeichnet, dass** die Paketstation (2) als Einschub zum seitlichen Einschieben in einen Rahmen des Fahrzeugs oder als Aufbau zum Aufsetzen auf das Fahrzeug ausgebildet ist.

7. Fahrzeug nach einem der vorherigen Ansprüche, **dadurch gekennzeichnet, dass** als Schloss (41) und Schlüssel (42) bzw. Masterschlüssel (44) insbesondere vorgesehen sind:
ein analoges oder digitales Zahlenschloss mit Zahlencode bzw. PIN; ein digitales Lesegerät mit digitalem Schlüssel, wie z.B. RFID Leser mit RFID Chip oder Barcode-Lesegerät und Barcode bzw. QR Code; ein Computer, welcher über Funknetzwerk oder Internetverbindung über eine App eine Türe öffnet, NFC Systeme und/oder als Masterschlüssel (44) eine elektrische Schaltung, z.B. mit einem Knopf zum Entriegeln aller Türen.

8. Verfahren zur Benutzung eines Fahrzeugs mit einer Paketstation, insbesondere des Fahrzeuges mit den Merkmalen nach einem der vorherigen Ansprüche, mit folgenden Schritten:
A) Beladen des Fahrzeugs mit ausliefernden Sendungen;
B) Verwendung des Fahrzeugs als Auslieferfahrzeug und Ausliefern der Sendungen; danach
C) Beladen des Fahrzeuges mit von den Empfängern selber abzuholenden Sendungen;
D) Fahren des Fahrzeugs an einen Ort und dortiges Abstellen;
E) Verwendung des Fahrzeugs als ortsfeste Paketstation durch die Empfänger der selbst abzuholenden Sendungen an dem Ort;
F) Wiederholung des Verfahrens.

9. Verfahren nach einem der vorherigen Ansprüche, wobei der Schritt A) folgenden Schritt umfasst:
- Bereitstellen des Fahrzeugs mit mit Sendungen gefüllten Fächern und verriegelten Türen, wobei die Sendungen an Empfänger an bestimmten Adressen auszuliefern sind;

10. Verfahren nach einem der vorherigen Ansprüche, wobei der Schritt B) folgende Schritte umfasst:
- Fahren des Fahrzeugs zu der Vielzahl von bestimmen Adressen und dabei wiederholt:
o Entriegeln der Türe des Fachs, in welcher sich die an der jeweiligen bestimmten Adresse auszuliefernden Sendung befindet mittels des Masterschlüssels;
o Öffnen der Türe;
o Entnehmen der Sendung; Schließen der Türe;
o Übergeben der Sendungen an den Empfänger;
- Fahren des Fahrzeugs zu einem Depot wenn die Auslieferungen beendet sind;
- Entriegeln aller Türen mittels des Masterschlüssels;
- optional: Entnehmen der nicht-ausgelieferten Sendungen;

11. Verfahren nach einem der vorherigen Ansprüche, wobei der Schritt C) folgende Schritte umfasst:
- Befüllen der Fächer der Paketstation mit Sendungen, die für die Benutzer der Paketstation bestimmt sind;
- optional: Übermittlung des Schlüssels, welcher der Tür des Fachs mit der Sendung für den jeweiligen Empfänger zugeordnet ist, an den jeweiligen Empfänger;
- optional: Übermittlung des Ortes, an welchen das Fahrzeug durch Durchführung des Schrittes D) fahren soll an die jeweiligen Empfänger, sofern der Ort bereits zum Zeitpunkt der Durchführung des Schrittes C) bestimmt ist;
- Schließen und Verriegeln aller Türen;

12. Verfahren nach einem der vorherigen Ansprüche, wobei der Schritt D) folgende Schritte umfasst:
- Fahren des Fahrzeugs an einen vorbestimmten und den Benutzern bekannten Ort und Abstellen des Fahrzeugs dort;
- optional: Übermittlung des Ortes, an welchem das Fahrzeug nach der Fahrt abgestellt worden ist an die jeweiligen Empfänger, wobei vorzugsweise der Ort durch ein im Fahrzeug installiertes GPS System festgestellt wurde;
- optional: Übermittlung des Schlüssels, welcher der Tür des Fachs mit der Sendung für den jeweiligen Empfänger zugeordnet ist, an den jeweiligen Empfänger;
- optional: Anschließen des Fahrzeugs an eine Infrastruktur, insbesondere Stromnetz, vorzugsweise zur Stromversorgung der Paketstation oder Laden der Akkus der Paketstation oder der Akkus des als Elektrofahrzeug ausgelegten Fahrzeugs;

13. Verfahren nach einem der vorherigen Ansprüche, wobei der Schritt E) folgende Schritte umfasst:
- Wiederholt für alle abholenden Empfänger:
o Entriegeln der Türe des Fachs, in welcher sich die von dem jeweiligen Empfänger abzuholende Sendung befindet mittels des Schlüssels, welcher der Tür des Fachs mit der Sendung für den jeweiligen Empfänger zugeordnet ist und welcher an dem Empfänger im Schritt C) oder D) übermittelt wurde:
o Öffnen der Türe;
o Entnehmen der Sendung;
o Optional: Einlegen einer Retoure durch den Empfänger in das geöffnete Fach;
o Schließen und Verriegeln der Türe;
- Fahren des Fahrzeugs zu dem Depot wenn die Nutzung als ortsfeste Paketstation beendet ist;
- Entriegeln aller Türen mittels des Masterschlüssels;
- optional: Entnehmen der nicht-abgeholten Sendungen.

14. Verfahren nach einem der vorherigen Ansprüche, wobei
- im Schritt E) die Paketstation auch zur Rückgabe von Retouren oder Aufgabe von Sendungen eingesetzt wird.

15. Verfahren nach einem der vorherigen Ansprüche, wobei
- die Paketstation auch als Warenverkaufsautomat benutzt wird, und zwar insbesondere gleichzeitig durch Nutzung eines oder mehrerer Fächer als Warenverkaufsautomat oder im zeitlichen Wechsel mit der Nutzung als Paketstation.
